# EUROPÄISCHE PATENTSCHRIFT

(11) **EP 0 593 410 B1**
(45) Veröffentlichungstag und Bekanntmachung des Hinweises auf die Patenterteilung: **16.07.1997**
(21) Anmeldenummer: 93890196.4
(22) Anmeldetag: 08.10.1993
(51) Int. Cl.: B29C 70/38

(54) **Verfahren und Vorrichtung zum streifenweisen Verlegen von Bandmaterial**
Process and apparatus for stripwise laying out of tape material
Procédé et dispositif pour poser par bandes un matériau en forme de ruban

(30) Priorität: 14.10.1992 AT 2021/92
(43) Veröffentlichungstag der Anmeldung: 20.04.1994
(73) Patentinhaber: GFM Gesellschaft für Fertigungstechnik und Maschinenbau Aktiengesellschaft, A-4403 Steyr (AT)
(72) Erfinder: Blaimschein, Gottfried, A-4407 Steyr (AT)
(74) Vertreter: Hübscher, Heiner, Dipl.-Ing.

(56) Entgegenhaltungen:
- EP-A- 0 243 688
- EP-A- 0 443 308
- US-A- 4 491 493

## Beschreibung

Die Erfindung bezieht sich auf ein Verfahren zum streifenweisen Verlegen von Bandmaterial, nach dem das einerseits mit einer Trägerschicht und anderseits gegebenenfalls mit einer Deckschicht versehene Bandmaterial zuerst in einer eigenen Schneidstation vorbereitet und anschließend über einen relativ zur Verlegefläche bewegbaren Legekopf verlegt wird, wobei in der Schneidstation das von einer Spenderrolle abgezogene Bandmaterial nach Abnahme einer gegebenenfalls vorhandenen Deckschicht und ohne ein Durchtrennen der Trägerschicht in vorbestimmte Streifen zerschnitten, der zwischen den Streifen verbleibende Schnittabfall entfernt und die Trägerschicht mit den einzelnen Bandmaterialstreifen auf eine Speicherrolle aufgewickelt wird und wobei dann im Legekopf das so vorbereitete Bandmaterial in Abhängigkeit von der Relativbewegung zwischen Legekopf und Verlegefläche von der Speicherrolle abgezogen und zum Auflegen der Bandmaterialstreifen auf die Verlegefläche an diese angedrückt sowie die dabei von den Bandmaterialstreifen abgehobene Trägerschicht auf eine Leermaterialrolle aufgewickelt wird, sowie auf eine Vorrichtung zur Durchführung dieses Verfahrens.

Verbundwerkstoffe aus faserverstärktem Kunststoff, insbesondere Prepregs, setzen sich wegen ihrer ausgezeichneten Festigkeitseigenschaften, ihres geringen Gewichtes und ihrer leichten Bearbeitbarkeit vor allem in der Flugzeug- und Fahrzeugindustrie, aber auch bei anderen Leichtbaukonstruktionen immer stärker durch, wobei dieses Verbundmaterial meist in Bandform vorgefertigt und dann streifenweise zum gewünschten Werkstück, zu einer speziellen Oberflächenbeschichtung u. dgl. zusammengesetzt wird. Das zu verlegende Bandmaterial, das im wesentlichen aus harzimprägnierten Verstärkungsfasern besteht, ist klebrig und wird zur einfacheren Handhabung zwischen einer unteren Trägerschicht und einer oberen Deckschicht eingebettet. Das endlos gefertigte Bandmaterial muß daher zum werkstückgerechten Verlegen von der Deckschicht befreit, dann entsprechend zugeschnitten und schließlich unter gleichzeitiger Trägerschichtabnahme an die jeweilige Verlegefläche angedrückt werden, wozu es grundsätzlich zwei verschiedene Verlegeverfahren gibt. Bei dem einen Verfahren erfolgen das Vorbereiten und Verlegen in einem gemeinsamen Verfahrensschritt mit Hilfe einer einheitlichen Verlegemaschine, die das Abnehmen der Deckschicht, das Zuschneiden des Bandmaterials, das Abnehmen des Schnittabfalles, das Andrücken der Bandmaterialstreifen und das Aufwickeln der Trägerschicht in einem Durchlauf vornehmen muß, wodurch es zu einer recht schweren, aufwendigen und daher auch leistungsschwachen, betriebsunsicherer Maschine kommt. Beim anderen Verfahren erfolgen das Vorbereiten und Verlegen in zwei voneinander getrennten Schritten in einer eigenen Schneidstation und einem speziellen Legekopf, wie dies z. B. aus der US-A 4 491 493 hervorgeht. Ein bereits legegerecht vorbereitetes Bandmaterial kann rasch, wirkungsvoll und exakt verlegt werden, es muß aber bisher sowohl in der Schneidstation als auch dann nach der Vorbereitung im Legekopf händisch eingelegt und eingefädelt werden, was umständlich und vor allem zeitraubend ist und Schwierigkeiten bei der Synchronisation des Vorbereitungs- und des Verlegevorganges befürchten läßt.

Gemäß der EP-A 0 243 688 ist es außerdem grundsätzlich bekannt, zum Ablegen von Bandmaterial Kassetten mit einer Vorrats- und einer Aufwickelspule für das auf ein Trägerband aufgebrachte Bandmaterial zu verwenden, wobei allerdings keine schon legefertig vorbereiteten Bänder vorgesehen sind, sondern das Bandmaterial beim Legen lageweise geschnitten wird.

Der Erfindung liegt daher die Aufgabe zugrunde, diese Mängel zu beseitigen und ein Verfahren der eingangs geschilderten Art anzugeben, das ein rationelles, weitgehend automatisiertes Vorbereiten und Verlegen von Bandmaterial gewährleistet. Außerdem soll eine Vorrichtung zum einfachen und einwandfreien Durchführen dieses Verfahrens geschaffen werden.

Die Erfindung löst diese Aufgabe dadurch, daß die Spenderrolle mit dem Bandmaterial und die Speicherrolle in eine sowohl in der Schneidstation als auch im Legekopf einsetzbare Wechselkassette eingelegt werden und daß das Bandmaterial beim Einsatz der Wechselkassette in der Schneidstation während des Umspulens von der Spenderrolle auf die Speicherrolle vorbereitet wird und dann beim Einsatz der Wechselkassette im Legekopf während des Rückspulens des vorbereiteten Bandmaterials von der Speicherrolle auf die jetzt als Leermaterialrolle dienende Spenderrolle die Bandmaterialstreifen verlegt werden. Trotz der Trennung des Vorbereitungsschrittes und des Legeschrittes braucht demnach das Bandmaterial nur einmal in eine Wechselkassette eingelegt bzw. von der Spenderrolle über die entsprechenden Führungseinrichtungen zur Speicherrolle gefädelt zu werden, wobei gleichzeitig eine eventuell vorhandene Deckschicht in eine Abzugseinrichtung eingespannt wird, und der gesamte anschließende Vorbereitungs- und Verlegevorgang bedarf keines neuen Einfädelns oder Umspannens mehr. Das Bandmaterial bleibt in der Kassette und wird während des Umwickelns von der Spenderrolle auf die Speicherrolle nicht nur von der Deckschicht befreit, sondern auch durch eine entsprechende Schneideinrichtung in die gewünschten Streifen zerschnitten, dann wird der Abfall durch eine geeignete Abnahmeeinrichtung entfernt und schließlich das vorbereitete Bandmaterial aus durchgehender Trägerschicht und einzelnen, werkstückgerecht zugeschnittenen Bandmaterialstreifen auf die Speicherrolle aufgewickelt. Diese Kassette wird nun der Schneidstation entnommen und dann bedarfsweise in den Legekopf eingesetzt, wo während des Zurückspulens des Bandmaterials von der Speicherrolle auf die Spenderrolle durch Andrücken der Bandmaterialstreifen auf die Verlegefläche diese Streifen von der Trägerschicht auf die Werkstückoberfläche od. dgl. übergeben werden. Die im Zuge des Andrückens der Bandmaterialstreifen auf die Werkstückoberfläche von diesen Bandmaterialstreifen abgehobene Trägerschicht wird einfach als Leermaterial auf die Spenderrolle aufgewickelt. Da es beim Um- bzw. Zurückspulen des Bandmaterials in der Kassette zu keinem Ausfädeln des Bandmaterials kommt und dieses Bandmaterial stets zwischen den Rollen eingespannt bleibt, sind auch eine exakte Kennzeichnung des Bandes und Steuerung des Bandablaufes möglich und die Schnittvorgänge beim Vorbereiten und das Andrücken beim Verlegen lassen sich entsprechend der jeweiligen Bandmaterialstreifen genau aufeinander abstimmen.

Bei den bekannten Vorrichtungen zum Vorbereiten und Verlegen des Bandmaterials gibt es eine vom Legekopf getrennte Schneidstation, wobei für den Bandablauf antreibbare Rollenhalter und entsprechende Führungs- und Steuerungseinrichtungen vorgesehen sind. Das Band wird dabei von der Spenderrolle über die jeweiligen Einrichtungen zum Deckschichtabzug, zum Zuschneiden und zum Schnittabfallabnehmen zur Speicherrolle geführt, so daß die erforderlichen Bandvorbereitungsschritte während des Bandablaufes erfolgen können. Ähnliches ist beim Legekopf, wo statt der Schneid- und Abnahmeeinrichtungen aber die Andrückeinrichtung zum Andrücken des Bandmaterials an die Werkstückoberfläche zur Verfügung steht. Ist nun zumindest eine sowohl in der Schneidstation als auch im Legekopf einsetzbare Wechselkassette vorgesehen, die zwei drehbare Aufnahmen für eine Spenderrolle und eine Speicherrolle besitzt und zwischen Bandführungseinrichtungen von außen zugängliche Bearbeitungszonen für das Bandmaterial bildet, wobei die Aufnahmen mit den Rollenhaltern sowohl der Schneidstation als auch des Legekopfes steckkupplungsartig zusammensteckbar sind und die Bearbeitungszonen beim Kassetteneinsatz in der Schneidstation im Arbeitsbereich der Schneid- und Abfallabnahmeeinrichtungen und beim Kassetteneinsatz im Legekopf im Angriffsbereich der Andrückeinrichtung liegen, kann durch einfaches Umstecken dieser Wechselkassette und ohne mehrfaches Einfädeln des Bandmaterials einerseits in der Schneidstation das Bandmaterial im gewünschten Sinne vorbereitet und anderseits im Legekopf das Verlegen der vorbereiteten Bandmaterialstreifen ausgeführt werden. Durch den Einsatz der Kassette in der Schneidstation kommt es zwangsweise zu einer Kopplung der Aufnahmen für die Spender- bzw. Speicherrolle mit den Rollenhaltern, was den erforderlichen Rollenantrieb mit sich bringt und außerdem wird allein durch das Aufstecken der Kassetten in die Schneidstation bzw. in den Legekopf das Bandmaterial innerhalb der Bearbeitungszonen den jeweiligen Einrichtungen zum Schneiden bzw. Abfallabnehmen oder Andrücken zugänglich, was das einwandfreie Vorbereiten und auch Verlegen des Bandmaterials gewährleistet. Durch die Verwendung von zwei und mehr Wechselkassetten läßt sich verschiedenstes Bandmaterial vorbereiten und dann bedarfsweise verlegen, so daß ein schnelles und weitgehend verlustzeitfreies Arbeiten möglich ist.

Um das Verlegen weiter rationalisieren zu können, ist ein zwischen der Schneidstation und einer dem Legekopf zugeordneten Übergabestation hin- und herbewegbarer Kassettenmanipulator zum Umstecken der Wechselkassetten von der Schneidstation in die Übergabestation und umgekehrt und gegebenenfalls von der Übergabestation in den Legekopf und umgekehrt vorgesehen. Die mit dem Bandmaterial bestückten Wechselkassetten brauchen daher nur einmal in die Schneidstation eingesetzt oder die in der Schneidstation sitzenden Kassetten einmal händisch mit dem Bandmaterial bestückt zu werden und alle weiteren Vorbereitungs- und Verlegeschritte erfolgen automatisch, wobei die Übergabestation den Austausch zwischen leeren und neuen Wechselkassetten erleichtert. Der Manipulator kann daher die vorbereiteten Kassetten in die Übergabestation und die Leerkassetten aus der Übergabestation zurück in die Schneidstation bringen, während der Legekopf selbst durch Heranfahren an die Übergabestation für das Übernehmen der vorbereiteten Kassetten bzw. Abgeben der Leerkassetten sorgt. Selbstverständlich wäre es auch möglich, den Kassettenaustausch zwischen Übergabestation und Legekopf über den Manipulator vorzunehmen, wenn beispielsweise die Übergabestation als reine Wartestation vorhanden bzw. nicht in Reichweite des Legekopfes angeordnet wäre.

Besonders vorteilhaft ist es weiters, wenn am Legekopf an der den Rollenhaltern abgewandten Seite ein höhenverstellbar abgestütztes Schneidaggregat, vorzugsweise ein Ultraschallmesser, angeordnet ist, da so nach dem Verlegen des Bandmaterials sofort auch ein ergänzendes Zuschneiden des aus dem Bandmaterial hergestellten Werkstückes ermöglicht wird. Dazu braucht dann lediglich das Schneidaggregat in Schneidposition abgesenkt zu werden und der Legekopf mit seinen vorhandenen Antriebs- und Steuerungseinrichtungen läßt sich auch als Werkzeugträger zum wunschgemäßen Einsatz des Schneidaggregates nutzen, wobei ein Ultraschallmesser zum Schneiden faserverstärkter Kunststoffmaterialien bestens geeignet ist. Durch die höhenverstellbare Anordnung des Schneidaggregates an der rollenhalterabgewandten Legekopfseite bleibt dabei die eigentliche Aufgabe des Legekopfes vollkommen unbeeinträchtigt und es wird weder der Einsatz der Wechselkassetten noch die Funktion der Andrückeinrichtung u. dgl. gestört.

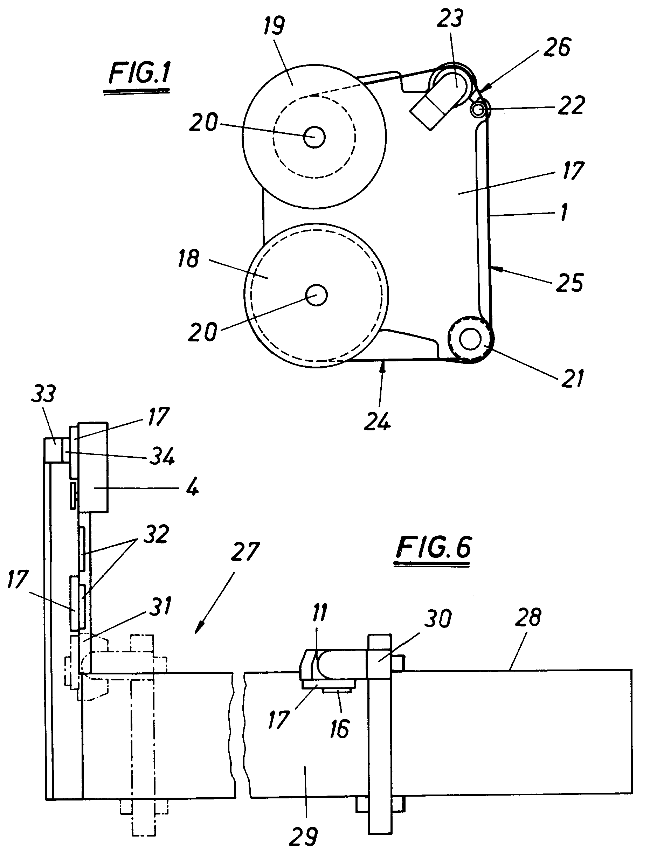

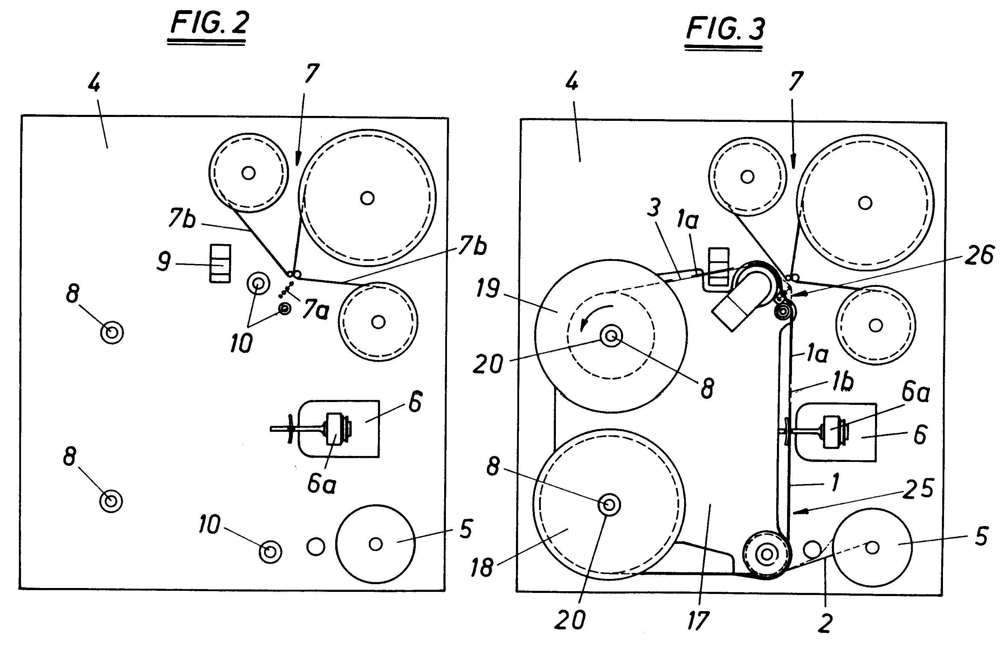

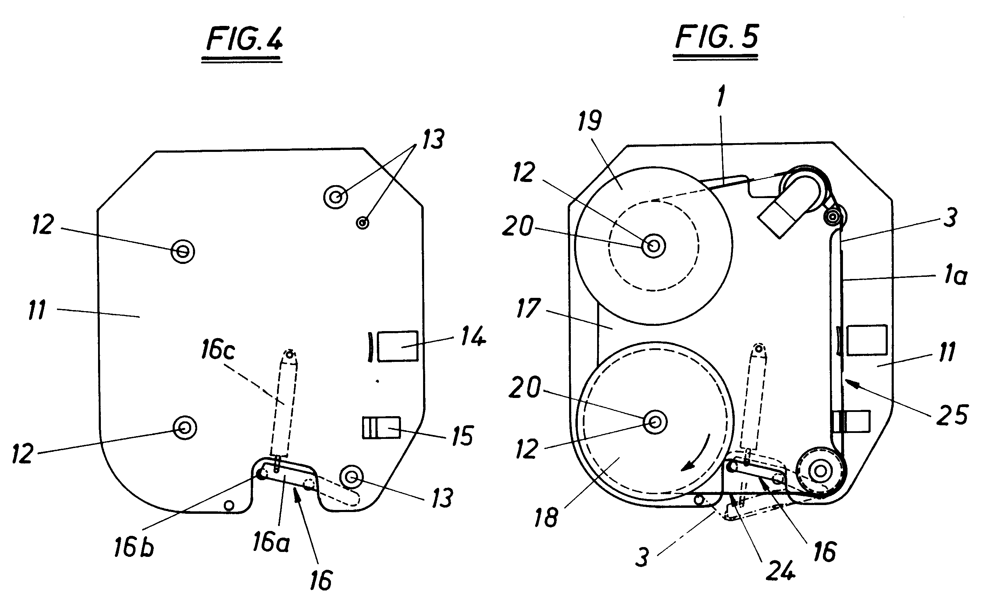

In der Zeichnung ist der Erfindungsgegenstand rein schematisch an Hand eines Ausführungsbeispieles näher veranschaulicht, und zwar zeigen Fig. 1 eine Wechselkassette für eine erfindungsgemäße Vorrichtung in Draufsicht, Fig. 2 und 3 einen Teil der Schneidstation dieser Vorrichtung ohne bzw. mit eingesetzter Kassette in Ansicht und Fig. 4 und 5 einen Teil des Legekopfes dieser Vorrichtung ohne bzw. mit eingesetzter Kassette ebenfalls in Ansicht sowie Fig. 6 die erfindungsgemäße Vorrichtung im Anlagenschema.

Um Bandmaterial 1, beispielsweise faserverstärktes Kunststoffmaterial, das zwischen einer Deckschicht 2 und einer Trägerschicht 3 eingebettet ist, rationell in Streifen verlegen zu können, wird dieses Material in einer eigenen Schneidstation 4 vorbereitet, in der eine Abzugseinrichtung 5 zum Abziehen der Deckschicht 2, eine Schneideinrichtung 6 zum Zuschneiden vorbestimmter Bandmaterialstreifen 1a ohne gleichzeitiges Durchtrennen der Trägerschicht 3 und eine Abnahmeeinrichtung 7 zum Entfernen des zwischen den Bandmaterialstreifen 1a verbleibenden Schnittabfalles 1b sowie zusätzlich entsprechend antreibbare Rollenhalter 8 zum Aufstecken von Bandmaterialrollen und nur angedeutete Einrichtungen 9, 10 zum Führen und Steuern des Bandablaufes vorgesehen sind. Zum eigenlichen Verlegen des vorbereiteten Bandmaterials gibt es einen Legekopf 11, der neben den antreibbaren Aufnahmen 12 für die Bandmaterialrollen und geeigneten Einrichtungen 13, 14, 15 zur Führung und Steuerung des Bandablaufes eine Andrückeinrichtung 16 zum Andrücken des Bandmaterials auf eine Verlegefläche aufweist.

Zur Rationalisierung des Verlegevorganges wird das Bandmaterial 1 in eine Wechselkassette 17 eingelegt, wo es von einer Spenderrolle 18 zu einer Speicherrolle 19 führt, welche Rollen 18, 19 auf drehbaren Aufnahmen 20 der Wechselkassette 17 sitzen. Das Bandmaterial 1 wird über Einrichtungen 21 , 22, 23 zur Führung und Steuerung des Bandablaufes gespannt und verläuft innerhalb entsprechender Bearbeitungszonen 24, 25, 26 von außen frei zugänglich zwischen den beiden Rollen 18, 19.

Wird nun die Kassette 17 in die Schneidstation 4 eingesetzt, passen die Aufnahmen 20 in Art von Steckkupplungen auf die Rollenhalter 8, so daß die erforderliche Bandmaterialbetätigung sichergestellt ist. Durch den Kassetteneinsatz befindet sich die Bearbeitungszone 25 der Kassette im Bearbeitungsbereich der Schneideinrichtung 6 und das Bandmaterial 1 wird hier beispielsweise einem Ultraschallmesser 6a zugeführt. Die Bearbeitungszone 26 ist der Abfallabnahmeeinrichtung 7 zugeordnet, wobei eine Umlenkeinrichtung 7a bedarfsweise für eine recht starke Bandkrümmung sorgt und Abzugsfolien 7b die sich durch die Krümmung von der Trägerschicht abhebenden Abfallstücke erfassen und vom Bandmaterial abziehen. Beim Einlegen der Kassette 17 in die Schneidstation 4 wird die noch vorhandene Deckschicht 2 des Bandmaterials 1 in die Abzugseinrichtung 5 eingefädelt, so daß beim Bandablauf vor der Schneideinrichtung 6 die Deckschicht entfernt wird.

Erfolgt die Bestückung einer Kassette 17 mit Bandmaterial 1 erst in der Schneidstation 4, muß selbstverständlich beim Einfädeln des Bandmaterials 1 für den ordnungsgemäßen Verlauf des Bandes im Bereich der Schneideinrichtung 6 und der Abfallabnahmeeinrichtung 7 gesorgt und auch die Deckschicht 2 in die Abzugseinrichtung 5 eingespannt werden.

Nach dem Einsetzen der Kassette 17 in die Schneidstation 4 bzw. dem Einfädeln des Bandmaterials wird nun während des Unspulens des Bandmaterials 1 von der Spenderrolle 18 zur Speicherrolle 19 nach dem Abnehmen der Deckschicht 2 das Bandmaterial 1 in der Schneideinrichtung 6 in die gewünschten Streifen zerschnitten, dann der zwischen den Streifen verbleibende Abfall durch die Abfallabnahmeeinrichtung 7 entfernt und anschließend die unzerschnittene Trägerschicht 3 mit den daraufliegenden Bandmaterialstreifen 1a auf der Speicherrolle 19 aufgewickelt. Nun ist das Bandmaterial für ein Verlegen vorbereitet und die Kassette wird der Schneidstation entnommen, die sofort wieder zum Aufnehmen einer neuen Kassette bereit ist.

Zum eigentlichen Verlegen wird dann die Kassette 17 mit dem vorbereiteten Bandmaterial 1 in den Legekopf 11 eingesetzt, wobei wiederum die Aufnahmen 20 mit den Rollenhaltern 12 steckkupplungsartig zusammenwirken. Beim Kassetteneinsatz im Legekopf 11 ist die Bearbeitungszone 24 der Andrückeinrichtung 16 zugeordnet, während in der Bearbeitungszone 25 die Steuerungs-und Führungseinrichtungen 14, 15 wirksam sind. Für den Einsatz der Kassette 17 ist die Andrückeinrichtung 16, die aus einem Schwenkarm 16a mit einer Andrückrolle 16b und einem Stellzylinder 16c besteht, in einer zurückgezogenen Ausgangsstellung und sie wird erst beim eigentlichen Verlegevorgang aktiviert (strichpunktierte Darstellung). Im Maße der Relativbewegung zwischen Legekopf und Legefläche wird das vorbereitete Bandmaterial nun von der Speicherrolle 19 zur Spenderrolle 18 zurückgespult, wobei zum Auflegen der einzelnen Bandmaterialstreifen auf die Verlegefläche das Bandmaterial über die Andrückrolle 16b der Andrückeinrichtung 16 gegen die Verlegefläche gedrückt und dabei die Bandstreifen abgelegt werden. Das beim Ablegen von den Bandmaterialstreifen abgehobene, nur mehr die Trägerschicht 3 umfassende Bandmaterial wird dann auf die nun als Leermaterialrolle dienende Spenderrolle 18 aufgewickelt.

Wie in Fig. 6 angedeutet, weist eine Vorrichtung 27 zum streifenweisen Verlegen von Bandmaterial einen Arbeitstisch 28 mit einer Werkstückauflage 29 und einen relativ zur Werkstückauflage 29 verfahrbaren Legeschlitten 30 auf, welcher Legeschlitten 30 mit dem eigentlichen Legekopf 11 ausgestattet ist. Zusätzlich zum Arbeitstisch 28 umfaßt die Verlegevorrichtung 27 eine eigene Schneidstation 4 und außerdem ist dem Legekopf 11 eine Übergabestation 31 zugeordnet, die wenigstens zwei Kassettenhalter 32 aufweist. Zwischen Schneidstation 4, Übergabestation 31 und dem in eine Übergabeposition verfahrenen Legekopf 11 (strichpunktierte Darstellung) ist ein Kassettenmanipulator 33 hin- und herbewegbar, der mit einem Greifer 34 o. dgl. die Kassetten 17 faßt und in die Schneidstation 4, die Übergabestation 31 oder dem Legekopf 11 einsetzt.

Eine neue Kassette 17 wird nun einfach in der Schneidstation 4 vorbereitet, während beispielsweise gleichzeitig eine bereits vorbereitete Kassette im Legekopf 11 eingesetzt ist und mit dem Legekopf 11 verarbeitet wird. Ist der Vorbereitungsvorgang der Schneidstation 4 beendet, nimmt der Kassettenmanipulator 33 mit seinem Greifer 34 die Kassette 17 von der Schneidstation 4 ab und setzt sie in der Übergabestation 31 in einen der Kassettenhalter 32 ein. Ist das Bandmaterial der im Legekopf 11 sich befindenden Kassette verlegt, fährt der Legekopf in Übergabeposition und der Manipulator 33 nimmt diese leere Kassette und setzt sie in den freien anderen Kassettenhalter 32 ein, worauf er die vorbereitete Kassette aus dem benachbarten Halter wieder in den Legekopf 11 einsetzt. Der Legekopf 11 ist wieder legebereit und kann seine Legearbeit fortsetzen. Inzwischen nimmt der Manipulator 33 die leere Kassette aus der Übergabestation 31 und bringt sie in die Schneidstation 4, wo sie mit neuem Bandmaterial bestückt und vorbereitet wird. Selbstverständlich könnten auch mehrere Kassettenhalter 32 in der Übernahmestation 31 vorgesehen sein, so daß eine größere Anzahl von vorbereiteten Bandkassetten für das Verlegen zur Verfügung steht.

Ist am Legekopf 11 an der kassettenabgewandten Seite ein Schneidaggregat höhenverstellbar angeordnet, kann das durch das Legeverfahren am Arbeitstisch 28 entstandene Werkstück sofort auch durch ein Zuschneiden weiterbearbeitet werden. Dazu braucht dann lediglich das Schneidaggregat in Schneidposition abgesenkt zu werden und der Legeschlitten 30 mit dem Legekopf 11 dient nun für das Schneidaggregat als Werkzeugschlitten, so daß entsprechende Schnittführungen möglich sind.

## Patentansprüche

1. Verfahren zum streifenweisen Verlegen von Bandmaterial (1), nach dem das einerseits mit einer Trägerschicht (3) und anderseits gegebenenfalls mit einer Deckschicht (2) versehene Bandmaterial (1) zuerst in einer eigenen Schneidstation (4) vorbereitet und anschließend über einen relativ zur Verlegefläche bewegbaren Legekopf (11) verlegt wird, wobei in der Schneidstation (4) das von einer Spenderrolle (18) abgezogene Bandmaterial (1) nach Abnahme einer gegebenenfalls vorhandenen Deckschicht (2) und ohne ein Durchtrennen der Trägerschicht (3) in vorbestimmte Streifen (1a) zerschnitten, der zwischen den Streifen (1a) verbleibende Schnittabfall (1b) entfernt und die Trägerschicht (3) mit den einzelnen Bandmaterialstreifen (1a) auf eine Speicherrolle (19) aufgewickelt wird und wobei dann im Legekopf (11) das so vorbereitete Bandmaterial (1) in Abhängigkeit von der Relativbewegung zwischen Legekopf (11) und Verlegefläche von der Speicherrolle (19) abgezogen und zum Auflegen der Bandmaterialstreifen (1a) auf die Verlegefläche an diese angedrückt sowie die dabei von den Bandmaterialstreifen (1a) abgehobene Trägerschicht (3) auf eine Leermaterialrolle (18) aufgewickelt wird, dadurch gekennzeichnet, daß die Spenderrolle (18) mit dem Bandmaterial (1) und die Speicherrolle (19) in eine sowohl in der Schneidstation (4) als auch im Legekopf (11) einsetzbare Wechselkassette (17) eingelegt werden und daß das Bandmaterial (1) beim Einsatz der Wechselkassette (17) in der Schneidstation (4) während des Umspulens von der Spenderrolle (18) auf die Speicherrolle (19) vorbereitet wird und dann beim Einsatz der Wechselkassette (17) im Legekopf (11) während des Rückspulens des vorbereiteten Bandmaterials (1) von der Speicherrolle (19) auf die jetzt als Leermaterialrolle dienende Spenderrolle (18) die Bandmaterialstreifen (1a) verlegt werden.

2. Vorrichtung zur Durchführung des Verfahrens nach Anspruch 1, mit einer Schneidstation (4) zum Vorbereiten des Bandmaterials (1) und einem relativ zu einer Werkstückauflage (29) bewegbaren Legekopf (11) zum Verlegen der vorbereiteten Bandmaterialstreifen (1a) wobei Schneidstation (4) und Legekopf (11) antreibbare Rollenhalter (8) zum Aufstecken von Bandmaterialrollen, Einrichtungen und Sensoren zum Führen und Steuern des Bandmaterialablaufes u. dgl. aufweisen und außerdem die Schneidstation (4) mit einer Deckschichtabzugseinrichtung (5), einer Schneideinrichtung (6) und einer Schnittabfallabnahmeeinrichtung (7) sowie der Legekopf (11) mit einer Andrückeinrichtung (16) ausgerüstet sind, dadurch gekennzeichnet, daß zumindest eine sowohl in der Schneidstation (4) als auch im Legekopf (11) einsetzbare Wechselkassette (17) vorgesehen ist, die zwei drehbare Aufnahmen (20) für eine Spenderrolle (18) und eine Speicherrolle (19) besitzt und zwischen Bandführungseinrichtungen (21, 22, 23) von außen zugängliche Bearbeitungszonen (24, 25, 26) für das Bandmaterial (1) bildet, wobei die Aufnahmen (20) mit den Rollenhaltern (8, 12) sowohl der Schneidstation (4) als auch des Legekopfes (11) steckkupplungsartig zusammensteckbar sind und die Bearbeitungszonen (24, 25, 26) beim Kassetteneinsatz in der Schneidstation (4) im Arbeitsbereich der Schneid- und Abfallabnahmeeinrichtungen (6, 7) und beim Kassetteneinsatz im Legekopf (11) im Angriffsbereich der Andrückeinrichtung (16) liegen.

3. Vorrichtung nach Anspruch 2, dadurch gekennzeichnet, daß ein zwischen der Schneidstation (4) und einer dem Legekopf (11) zugeordneten Übergabestation (31) hin- und herbewegbarer Kassettenmanipulator (33) zum Umstecken der Wechselkassetten (17) von der Schneidstation (4) in die Übergabestation (31) und umgekehrt und gegebenenfalls von der Übergabestation (31) in den Legekopf (11) und umgekehrt vorgesehen ist.

4. Vorrichtung nach Anspruch 2, dadurch gekennzeichnet, daß am Legekopf (11) an der den Rollenhaltern (12) abgewandten Seite ein höhenverstellbar abgestütztes Schneidaggregat, vorzugsweise ein Ultraschallmesser, angeordnet ist.

## Claims

1. A method of laying strips of tape material (1) wherein the tape material (1) provided with a carrier layer (3) and an optional outer layer (2) is first prepared in a separate cutting station (4) and then laid by a head (11) movable relatively to the laying surface, wherein in the cutting station (4) the tape material is drawn off a supply reel (18) and is cut into predetermined strips (1a) after removal of any outer layer (2) and without cutting through the carrier layer (3), the waste (1b) between the strips (1a) is removed and the carrier layer (3) and the individual strips (1a) of tape material are wound on to a take-up reel (19) and wherein the tape material (1) thus prepared is then drawn off the take-up reel (19) in the laying head (11) in dependence on the relative movement between the laying head (11) and the laying surface and the strips (1a) are laid on the surface by being pressed against it and the carrier layer (3) lifted off the strips (1a) is wound on to an empty material reel (18), characterised in that the supply reel (18) with the tape material (1) and the take-up reel (19) are inserted in an interchangeable magazine (17) for use both in the cutting station (4) and in the laying head (11), and in that when the magazine (17) is used in the cutting station (4) the tape material (1) is prepared during transfer from the supply reel (18) to the take-up reel (19) and then, when the magazine (17) is used in the laying head, the strips (1a) of tape material are laid during rewinding of the prepared tape material (1) from the take-up reel (19) back to the supply reel (18) which now serves as an empty material reel.

2. Apparatus for working the method according to claim 1, comprising a cutting station (4) for preparing the tape material (1) and a laying head (11) movable relatively to a workpiece rest (29) for laying the prepared strip (1a) of tape material, the cutting station (4) and the laying head (11) comprising drivable reel holders for inserting reels of tape material, devices and sensors for guiding and controlling the moving tape material etc. and also the cutting station (4) is equipped with an outer layer removal device (5), a cutting device (6) and a cutting waste removal device (7) and the laying head (11) is equipped with a presser device (16), characterised in that at least one interchangeable magazine (17) for use both in the cutting station (4) and in the laying head (11) is provided and has two rotatable recesses (20) for a supply reel (18) and a take-up reel (19) and forms processing zones (24, 25, 26) for the tape material (1) accessible from the exterior between tape guide devices (21, 22, 23), wherein the recesses (20) can be plugged to the reel holders (18, 12) in both the cutting station (4) and the laying head (11) and the processing zones (24, 25, 26) are within the working range of the cutting and waste-removal devices (6, 7) when the magazine is used in the cutting station (4) and are in the range of engagement of the presser device (16) when the magazine is used in the laying head (11).

3. Apparatus according to claim 2, characterised in that a magazine manipulator (33) movable in reciprocation between the cutting station (4) and a transfer station (31) associated with the laying head (11) is provided for transferring the magazine (17) from the cutting station (4) to the transfer station (31) and vice versa and optionally from the transfer station (31) to the laying head (11) and vice versa.

4. Apparatus according to claim 2, characterised in that a vertically adjustably supported cutting unit, preferably an ultrasonic cutter, is disposed on the laying head (11) on the side remote from the reel holders (12).

## Revendications

1. Procédé de pose, en bandes, d'un matériau en ruban (1), selon lequel le matériau en ruban (1) pourvu, d'une part, d'une couche support (3) et, d'autre part, le cas échéant, d'une couche de couverture (2) est d'abord préparé, dans un poste de découpage (4) propre, puis posé, par l'intermédiaire d'une tête de pose (11) déplaçable par rapport à la surface de pose, le matériau en bande (1), ayant été extrait d'un rouleau distributeur (18), étant découpé en bandes (1a) prédéterminées dans le poste de découpage (4), après enlèvement d'une couche de couverture (2) le cas échéant existante et sans effectuer de séparation de la couche support (3), la chute de coupe (1b) subsistant entre les bandes (1a) étant enlevée et la couche support (3) étant enroulée, avec les bandes de matériau en ruban (1a) individuelles, sur un rouleau de stockage (19), et le matériau en ruban (1) ainsi préparé étant extrait du rouleau de stockage (19) dans la tête de pose (1), en fonction du mouvement relatif se déroulant entre la tête de pose (1) et la surface de pose et étant pressé sur la surface de pose, pour assurer la pose des bandes de matériau en ruban (1a), la couche support (3), ayant été alors enlevée des bandes de matériau en ruban (1a), étant enroulée sur un rouleau de matériau vide (18), caractérisé en ce que le rouleau distributeur (18) est inséré, avec le matériau en ruban (1) et le rouleau de stockage (19), dans une cassette interchangeable (17), pouvant être insérée, tant dans le poste de découpage (4) qu'également dans la tête de pose (11), et en ce que, lors de l'insertion de la cassette interchangeable (17) dans le poste de découpage (4), le matériau en ruban (1) est préparé pendant le rebobinage du rouleau distributeur (18) sur le rouleau de stockage (19) et ensuite, lors de l'insertion de la cassette interchangeable (17) dans la tête de pose (1), les bandes de matériau en ruban (1a) sont posées, pendant le rebobinage, fait à partir du rouleau de stockage (19), du matériau en ruban (1), ayant été préparé, sur le rouleau distributeur (18) servant à présent de rouleau de matériau vide.

2. Dispositif de mise en oeuvre du procédé selon la revendication 1, comportant un poste de découpage (4), pour assurer la préparation du matériau en ruban (1), et une tête de pose (11) déplaçable par rapport à une embase de pièce (29), pour assurer la pose des bandes de matériau en ruban (1a) ayant été préparées, le poste de découpage (4) et la tête de pose (1) présentant des porte-rouleaux (8) pouvant être entraînés, pour enfiler des rouleaux de matériau en ruban, et présentant des dispositifs et des capteurs pour guider et commander le déroulement du matériau en ruban et analogue et, en outre, le poste de découpage (4) étant équipé d'un dispositif d'extraction de couche de couverture (5), d'un dispositif de découpage (6) et d'un dispositif d'enlèvement de chute de coupe (7), et la tête de pose (1) étant équipée d'un dispositif de pressage (16), caractérisé en ce qu'au moins une cassette interchangeable (17), pouvant être insérée tant dans le poste de découpage (4), qu'également dans la tête de pose (1), est prévue, cassette comportant deux logements (20) susceptibles de tourner, pour recevoir un rouleau distributeur (18) et un rouleau de stockage (19), et constituant, entre les dispositifs de guidage de ruban (21, 22, 23), des zones de travail (24, 25, 26), accessibles de l'extérieur, pour le matériau en ruban (1), les logements (20) étant susceptibles d'être emboîtés à la façon d'un accouplement à enfichage avec les porte-rouleaux (8, 12) appartenant tant au poste de découpage (4) qu'également à la tête de pose (1), et les zones de travail (24, 25, 26) étant situées, lors de l'insertion de la cassette dans le poste de découpage (4), dans la zone de travail des dispositifs d'enlèvement de coupures et de déchets (6, 7) et étant situées dans la zone d'action du dispositif de pressage (16) lors de l'insertion de la cassette dans la tête de pose.

3. Dispositif selon la revendication 2, caractérisé en ce qu'est prévu un manipulateur à cassette (33) susceptible d'être déplacé dans un sens et dans l'autre entre le poste de découpage (4) et un poste de transfert (31) associé à la tête de pose (1), ceci pour assurer le retournement et l'enfichage des cassettes interchangeables (17) du poste de découpage (4) dans le poste de transfert (31) et inversement et, le cas échéant, du poste de transfert (31) dans la tête de pose (11) et inversement.

4. Dispositif selon la revendication 2, caractérisé en ce que, sur la tête de pose (11), du côté opposé aux porte-rouleaux (12), est disposé un groupe de découpage, en appui et pouvant être réglé en hauteur, de préférence un couteau à ultrasons.
